# EUROPEAN PATENT SPECIFICATION

(11) **EP 2 069 819 B1**
(45) Date of publication and mention of the grant of the patent: **23.01.2013**
(21) Application number: 06821726.4
(22) Date of filing: 06.10.2006
(51) Int. Cl.: G01S 7/40, G01S 13/90, G01S 13/76

(54) **ACTIVE TRANSPONDER, PARTICULARLY FOR SYNTHETIC APERTURE RADAR, OR SAR, SYSTEMS**
AKTIVER TRANSPONDER, INSBESONDERE FÜR SYSTEME DES RADARS MIT SYNTHETISCHER APERTUR BZW. SAR
TRANSPONDEUR ACTIF, PARTICULIÈREMENT POUR DES SYSTÈMES DE RADARS À SYNTHÈSE D'OUVERTURE OU SAR

(43) Date of publication of application: 17.06.2009
(73) Proprietor: SPACE ENGINEERING S.p.A., 00155 Roma (IT)
(72) Inventor: CHIASSARINI, Giuseppe, 00155 Roma (IT); D'ANGELO, Guiseppe, 00155 Roma (IT)
(74) Representative: Iannone, Carlo Luigi
(86) International application number: PCT/IT2006/000710
(87) International publication number: WO 2008/041252

(56) References cited:
- DE-A1- 3 248 879
- US-A- 5 486 830
- US-A- 5 821 895
- US-A1- 2002 196 178
- US-A1- 2004 178 944
- US-B1- 6 577 266
- DAVID HOUNAM ET AL: "A Technique for the Identification and Localization of SAR Targets Using Encoding Transponders" IEEE TRANSACTIONS ON GEOSCIENCE AND REMOTE SENSING, IEEE SERVICE CENTER, PISCATAWAY, NJ, US, vol. 39, no. 1, January 2001 (2001-01), XP011021654 ISSN: 0196-2892
- DALEMAN P S ET AL: "Experience With Active Radar Calibrators For Airborne Sar" -, 20 May 1990 (1990-05-20), pages 795-798, XP010001952
- KODAIRA N: "Possibility Of The Use Of A Transponder As An Active Sar Calibration Target" -, vol. 1, 10 July 1989 (1989-07-10), pages 258-260, XP010210378

## Description

The present invention relates to an active transponder, in particular usable in synthetic aperture radar systems, or SAR, that allows a SAR interrogator device, carried on an aircraft or satellite, to identify, in a reliable, simple and efficient way, objects associated with the transponder and to collect information thereon.

It is known that the synthetic aperture radar, or SAR, is a microwave remote sensing active system that, installed onboard aircrafts or satellites, allows high resolution images of the observed scene to be generated independently from meteorological conditions and presence of sunlight. Generally, the wavelength of the microwaves used in a SAR system ranges from 3 to 30 cm.

Sensing resolution substantially depends on the band of the signal transmitted by the radar, the antenna beam angle and the distance between the radar system and the observed surface.

In applications requiring a continuous monitoring, as for instance in ground motion monitoring, the radar is preferably installed onboard a satellite. Notwithstanding the large distance at which such radar operates, equal to about 800 Km, SAR technology allows a high spatial resolution to be obtained, through an operation of processing the echo reflected by the surface irradiated by the transmitted signal. In particular, such processing makes a focusing of the image synthesising the reflected echo so as to simulate an antenna aperture significantly larger than that of the antenna actually installed onboard the aircraft.

One of the characteristics of the SAR systems is their capability to follow both the amplitude and the phase behaviour of the backscattered echo. In some applications, such as the Ground Motion Monitoring, the presence of Permanent Targets, or PTs, over the territory under observation allows possible ground variations to be detected through the analysis of the time sequences of the images obtained from the same scene. PTs have radio scattering properties known to the SAR system which remain stable in time.

Present PTs may be passive devices, such as reflectors known to the skilled in the art as "comer reflectors", or antenna active transponders. In the latter case, the signal re-transmitted by the transponder must have the same frequency of the received signal and a phase relationship with the received signal that is stable in time.

German Patent Application No. DE 32 48 879 A1 discloses a system adopting the technique of identification of the signals transmitted by the transponder with respect to the neighbouring ones, through transmission power and time location.

Such system suffers from some drawbacks. In fact, it subtracts scattering zones, and it does not allow the object to be distinguished from other close ones of the same kind.

US Patent No. US 5821895 discloses a system adopting the technique of identification of the signals from the transponder through encoding of the single pulse. The SAR receiver device carries out correlations along azimuth and range directions of the received signal with the transmitted and expected SAR signal. These correlations do not detect the presence of the transponder for low correlation because of the presence of the code on the signal generated by the transponder. Differently, if correlations take account of the encoding on the transponder signal, then they detect a correlation peak in correspondence with the transponder position. In this way, the signal transmitted by the transponder is scarcely visible by the SAR receiver and it has not to be delayed to minimum scattering instant of poor interest. The system of Patent No. US 5821895 also adopts the technique of detection of the single SAR pulse for applying the code to the signal received by the SAR device.

Even this system suffers from some drawbacks.

First of all, the adopted technique is subject to detection errors due to the noise of the transponder receiver. Single pulse detection errors are terrible because when a pulse is lost, the applied code is misaligned and correlation is compromised or annulled.

Moreover, the system of Patent No. US 5821895 adopts the technique of intermediate frequency modulation, hence requiring the use of synthesisers and frequency converters which introduce harmonic and spurious components which may jeopardise the signal processing and increase the background noise.

It is therefore an object of the present invention to allow, in a radar system, in particular a SAR system, to identify, in a reliable, simple, and efficient way, even in a high reflection environment, objects associated with a transponder and to collect information thereon.

It is specific subject matter of the present invention an active transponder, for synthetic aperture radar systems, or SAR, comprising:
- receiving antenna means, capable to receive a first radiofrequency signal modulated according to a first train of one or more first pulses;
- first processing means, connected to the receiving means, capable to amplify and filter the first radiofrequency signal;
- separating means, connected to the first processing means, comprising two outputs at each one of which it outputs the signal coming from the first processing means;
- second processing means, connected to a first output of the separating means, capable to generate at least one code synchronised with the first pulses;
- signal generating means, connected to a second output of the separating means and to the second processing means, capable to generate a second radiofrequency signal modulated by said at least one code generated by the second processing means;
- third processing means, connected to the signal generating means, capable to amplify and filter the second radiofrequency signal; and
- transmitting antenna means, capable to transmit the second radiofrequency signal;
wherein the second processing means is capable to generate, for each one of the first pulses, a sequence of one or more second pulses, said at least one code being synchronised with the second pulses; and
wherein said second processing means further comprise:
- envelope detecting means, connected to the first output of the separating means, capable to generate a sequence of one or more envelopes for each one of the first pulses;
- means for tracking the timing of the first pulses;
the transponder being characterised in that said means for tracking the timing of the first pulses comprise:
- Delay Locked Loop tracking means, connected to the envelope detecting means, capable to generate a clock signal, synchronised with said envelopes, and a start signal, synchronised with the first train of one or more first pulses;
- code generating means, connected to the Delay Locked Loop tracking means, capable to generate a not modulated code that varies in synchronisation with said clock signal according to a variation rule synchronised with said start signal; and
- counting means capable to generate a count synchronised with said clock signal, set at a starting value by said start signal;
the second processing means further comprising:
- memory means, connected to the counting means, which outputs data stored at the memory address equal to said count; and
- first modulating means, connected to the code generating means and to the memory means, capable to generate said sequence of one or more second pulses through modulation of said not modulated code through the data outputted by the memory means.

Furthermore according to the invention, the envelope detecting means may be capable to generate an envelope for each one of the first pulses.

Always according to the invention, said variation rule may be changeable through code changing means.

Still according to the invention, the data stored at the memory address, corresponding to the starting value of said count, may comprise a transponder identifier.

Furthermore according to the invention, the data stored in the memory means may comprise data, preferably periodically updated, coming from one or more sensors associated with the transponder.

Always according to the invention, the Delay Locked Loop tracking means may be provided with fast acquisition means, capable to generate said start signal.

Still according to the invention, said fast acquisition means may comprise correlating means, capable to process one or more correlations between the first train of one or more first pulses and one or more second trains of one or more third reference pulses.

Furthermore according to the invention, the signal generating means may comprise modulating means, capable to modulate the signal coming from the separating means through said at least one code generated by the second processing means, thus obtaining the second radiofrequency signal.

Always according to the invention, the modulating means may be capable to phase and/or amplitude and/or frequency modulate the signal coming from the separating means.

Still according to the invention, the modulating means may be capable to shift the frequency of the signal coming from the separating means.

It is still specific subject matter of the present invention a method of receiving a first radiofrequency signal and of transmitting a second radiofrequency signal, for synthetic aperture radar systems, or SAR, comprising the following steps:
A. receiving a first radiofrequency signal modulated according to a first train of one or more first pulses;
B. amplifying and filtering the first radiofrequency signal;
C. generating at least one code synchronised with the first pulses;
D. generating a second radiofrequency signal modulated by said at least one code;
E. amplifying and filtering the second radiofrequency signal; and
F. transmitting the second radiofrequency signal;
wherein step C comprises:
generating, for each one of the first pulses, a sequence of one or more second pulses, said at least one code being synchronised with the second pulses, and a further sub-step.
   C.1 generating a sequence of one or more envelopes for each one of the first pulses;
the method being characterised in that step C comprises:
C.2 generating a clock signal, synchronised with said envelopes, and a start signal, synchronised with the first train of one or more first pulses;
C.3 generating a not modulated code that varies in synchronisation with said clock signal according to a variation rule synchronised with said start signal;
C.4 generating a count synchronised with said clock signal, set at a starting value by said start signal;
C.5 providing stored data corresponding to said count; and
C.6 generating said sequence of one or more second pulses through modulation of said not modulated code through the data provided in sub-step C.5.

Always according to the invention, step C may comprise:
tracking a timing of the first pulses.

Furthermore according to the invention, sub-step C.1 may generate an envelope for each one of the first pulses.

It is further specific subject matter of the present invention a SAR system, comprising a transmitting and receiving device and at least one active transponder, characterised in that the active transponder is a transponder as previously described.

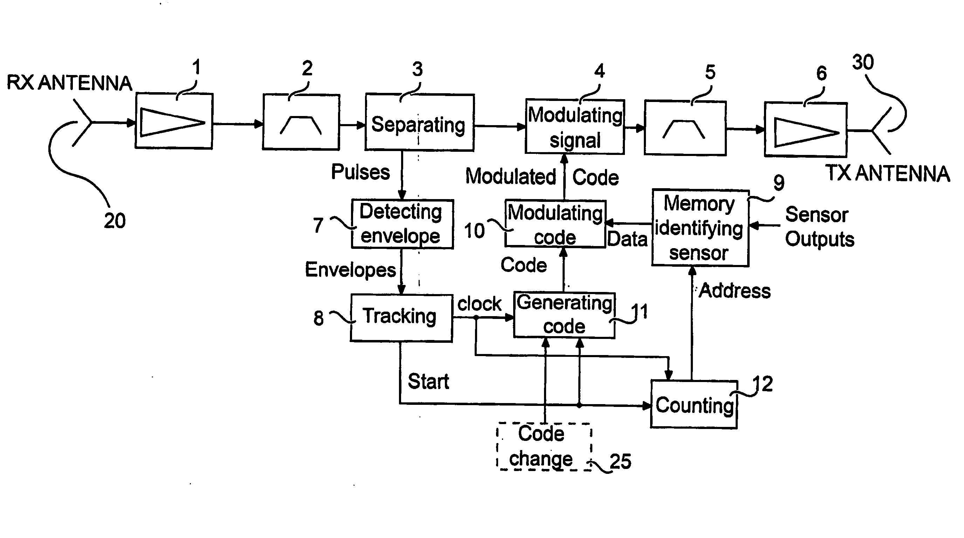

The present invention will now be described, by way of illustration and not by way of limitation, according to its preferred embodiments, by particularly referring to the sole Figure of the enclosed drawings, showing a schematic block diagram of the active transponder according to the invention.

The inventors have developed a method and a device for locating, identifying, and collecting data on objects, using an active transponder in presence of a transmitting and receiving SAR device carried by an aircraft or a satellite. In particular, the active transponder receives the signal transmitted by the transmitting SAR device and provides for re-transmitting it back to the receiving SAR after phase encoding and addition of a transponder identification code and of local data related to the same transponder and to objects, preferably sensors, associated with the transponder. A processing device after the receiving SAR device, capable to decode signals received from transponders, is thus able to extract the identification code and local data.

In particular, the transponder according to the invention adopts an encoding of the SAR pulse different from that of the prior art systems, since it is based on a tracking of pulse timing, instead of the technique of detection of the single pulse. Timing tracking greatly reduces the probability of pulse loss and the consequent correlation loss.

Also, this allows to carry out not only the encoding of the single pulse, but the encoding inside the same pulse, in particular when the precision with which signal timing may be reconstructed is sufficiently high. Encoding inside the pulse allows noise immunity and transponder position measure accuracy to be improved.

Differently from the prior art, the transponder according to the invention may further use a preamble for the transponder identifying code, allowing the transponder to be identified in an area where several transponders are present and if the use of the sole code diversity is not sufficient for characterising the same.

Sensors associated with the transponder may transmit local detection data, for instance, environmental information coming from proper sensors.

Transmission of identifying code and data occurs through phase modulation in addition to that produced by the code. Each bit of the identifying code and the data occupies a number or a fraction of pulses adequate to ensure an acceptable value of the signal power/noise power ratio, and therefore an acceptable error rate.

In presence of low error rate conditions, transmission of the data and the identifier does not jeopardise the range and azimuth measure by the SAR receiver device, since identifier and data, once detected, may be used by the SAR receiver device for an intermediate processing. This processing removes the phase modulation of local data and identifier, known by that time, and it brings the final SAR processing back to the conventional case.

In particular, the transponder according to the invention adopts the technique of radio frequency modulation, eliminating the use of synthesisers and frequency converters, thus preventing harmonic and spurious components which may jeopardise the signal processing and increase the background noise from being introduced.

With reference to the Figure, it may be observed that the preferred embodiment of the transponder according to the invention comprises a receiving antenna 20 and a transmitting antenna 30, connected to each other through a cascade of stages shown in detail below. In particular, the receiving antenna 20 and the transmitting antenna 30 are adequately decoupled through an arrangement according to different directions and/or different polarisations.

The receiving antenna 20 is connected to the input of a low noise amplifier 1, which it provides with the wide band and low power received signal, that is amplified for keeping along the following stages a sufficient signal-to-noise ratio or SNR. The output of the low noise amplifier 1 is connected to the input of a band-pass filter 2, that outputs the filtered signal in which components in bands of no interest are excluded.

The output of filter 2 is connected to the input of a two-output separator 3, that provides a modulator 4 and an envelope detector 7 with the amplified and filtered signal, which, in presence of useful signal received from a SAR transmitter, comprises a modulated pulse train.

Envelope detector 7 outputs an envelope train corresponding to the pulse train received by the 3 to a Delay Locked Loop tracking stage 8. Preferably, detector 7 provides an envelope for each pulse received by separator 3.

Tracking stage 8 outputs a clock signal and a start signal to a code generator 11 and to a counter 12. The clock signal represents the time axis of the envelope train generated by envelope detector 7, in terms of a stabilised pulse sequence synchronised with the same envelope sequence. The start signal marks the time at which the process of reconstructing the time axis is deemed as reliable, i.e. the start instant of the SAR signal (that is, of the related pulse train) and the modulating process may be performed.

Code generator 11 outputs a code signal to a code modulator 10 in terms of a pulse train with phase varying at each pulse with variation synchronised with the pulse train generated by detector 7. The variation rule is internal to code generator 11 and it may be changed through an external code change control 25.

Counter 12 outputs the address of the datum to be transmitted to a memory 9, through modulation of the code generated by generator 11. Counter 12 operates on the basis of the clock signal, that causes it to advance, and of the start signal, that causes it to start.

Memory 9 provides code modulator 10 with the data in the sequence defined by the address sequence, as received by counter 12. The data are constituted of a transponder identifier (preferably contained within the first address of the sequence) and of a series of data preferably coming from sensors (not shown), such as for instance temperature, moisture, power supply, antenna aiming sensors (the data of which are advantageously periodically updated).

Code modulator 10 outputs a modulated code signal, obtained by modulating the code signal provided by generator 11 with the data of memory 9 retrieved according to the address sequence generated by counter 12, to signal modulator 4. In other words, the modulated code signal is obtained starting from the code signal provided by generator 11 through further phase variations, applied in the same application instants of the previous ones, produced by the data train also synchronised with the pulse train received by the receiving antenna 20.

Signal modulator 4 provides a filter 5 with the SAR signal, i.e. with the pulse train received by the receiving antenna 20, phase modulated with the phase sequence represented by the modulated code signal received by modulator 10.

Filter 5 provides an amplifier 6 with the SAR signal that is phase modulated and restricted to the band of interest, in order to avoid interferences on other bands and to exploit as much as possible the amplification chain.

Amplifier 6 provides the transmitting antenna 30 with the SAR signal that is phase modulated, filtered and amplified up to the desired level for its transmission towards the space.

The active transponder of the Figure further comprises a power supply stage, not shown.

Other embodiments of the transponder according to the invention provide that Delay Locked Loop tracking stage 8 is provided with a fast acquisition device, in order to minimise the time passing from the appearance of the first pulses and the activation of the start signal. The fast acquisition device may be constituted, for instance, of a correlator detecting the maximum correlation between the received pulse train and the expected pulse train. A plurality of correlators may be used in parallel with several timing in order to speed up the acquisition.

Furthermore, signal modulator 4 may apply modulations alternative or additional to the phase one, in order to increase the decorrelation of the transmitted signal with respect to natural reflectors and/or to transmit more information. By way of example, but not by way of limitation, modulator 4 may apply the amplitude modulation.

Moreover, signal modulator 4 may apply a proper frequency shift allowing the signal band to be reversed. In this way, for instance, in the case of chirp-like modulated pulse, the decorrelation between natural reflectors and the transponder signal increases in terms of larger ratio between useful signal and interfering signal and of lower interference on the detection of natural reflectors.

Alternatively, signal modulator 4 may be replaced with a signal generating stage capable to generate, for each SAR pulse received by the receiving antenna 20, a pulse of different length and/or different modulation and/or different energy, in order to increase the decorrelation of the transmitted signal with respect to natural reflectors and/or to transmit more information. By way of example and not by way of limitation, such stage could generate a frequency modulated signal.

The preferred embodiments have been above described and some modifications of this invention have been suggested, but it should be understood that those skilled in the art can make variations and changes, without so departing from the related scope of protection, as defined by the following claims.

## Claims

1. Active transponder, for synthetic aperture radar systems, or SAR, comprising:
- receiving antenna means (20), capable to receive a first radiofrequency signal modulated according to a first train of one or more first pulses;
- first processing means (1, 2), connected to the receiving means (20), capable to amplify and filter the first radiofrequency signal;
- separating means (3), connected to the first processing means (1, 2), comprising two outputs at each one of which it outputs the signal coming from the first processing means (1, 2);
- second processing means (7, 8, 9, 10, 11, 12), connected to a first output of the separating means (3), capable to generate at least one code synchronised with the first pulses;
- signal generating means (4), connected to a second output of the separating means (3) and to the second processing means (7, 8, 9, 10, 11, 12), capable to generate a second radiofrequency signal modulated by said at least one code generated by the second processing means (7, 8, 9, 10, 11, 12);
- third processing means (5, 6), connected to the signal generating means (4), capable to amplify and filter the second radiofrequency signal; and
- transmitting antenna means (30), capable to transmit the second radiofrequency signal;
wherein the second processing means (7, 8, 9, 10, 11, 12) is capable to generate, for each one of the first pulses, a sequence of one or more second pulses, said at least one code being synchronised with the second pulses; and
wherein said second processing means further comprise:
- envelope detecting means (7), connected to the first output of the separating means (3), capable to generate a sequence of one or more envelopes for each one of the first pulses;
- means for tracking the timing of the first pulses;
the transponder being **characterised in that** said means for tracking the timing of the first pulses comprise:
- Delay Locked Loop tracking means (8), connected to the envelope detecting means (7), capable to generate a clock signal, synchronised with said envelopes, and a start signal, synchronised with the first train of one or more first pulses;
- code generating means (11), connected to the Delay Locked Loop tracking means (8), capable to generate a not modulated code that varies in synchronisation with said clock signal according to a variation rule synchronised with said start signal; and
- counting means (12) capable to generate a count synchronised with said clock signal, set at a starting value by said start signal;
the second processing means further comprising:
- memory means (9), connected to the counting means (12), which outputs data stored at the memory address equal to said count; and
- first modulating means (10), connected to the code generating means (11) and to the memory means (9), capable to generate said sequence of one or more second pulses through modulation of said not modulated code through the data outputted by the memory means (9).

2. Transponder according to claim 1, **characterised in that** the envelope detecting means (7) are capable to generate an envelope for each one of the first pulses.

3. Transponder according to claim 1 or 2, **characterised in that** said variation rule is changeable through code changing means (25).

4. Transponder according to any one of the preceding claims, **characterised in that** the data stored at the memory address, corresponding to the starting value of said count, comprise a transponder identifier.

5. Transponder according to any one of the preceding claims, **characterised in that** the data stored in the memory means (9) comprise data, preferably periodically updated, coming from one or more sensors associated with the transponder.

6. Transponder according to any one of the preceding claims, **characterised in that** the Delay Locked Loop tracking means (8) is provided with fast acquisition means, capable to generate said start signal.

7. Transponder according to claim 6, **characterised in that** said fast acquisition means comprises correlating means, capable to process one or more correlations between the first train of one or more first pulses and one or more second trains of one or more third reference pulses.

8. Transponder according to any one of the preceding claims, **characterised in that** the signal generating means comprises modulating means (4), capable to modulate the signal coming from the separating means (3) through said at least one code generated by the second processing means (7, 8, 9, 10, 11, 12), thus obtaining the second radiofrequency signal.

9. Transponder according to claim 8, **characterised in that** the modulating means (4) is capable to phase and/or amplitude and/or frequency modulate the signal coming from the separating means (3).

10. Transponder according to claim 8 or 9, **characterised in that** the modulating means (4) is capable to shift the frequency of the signal coming from the separating means (3).

11. Method of receiving a first radiofrequency signal and of transmitting a second radiofrequency signal, for synthetic aperture radar systems, or SAR, comprising the following steps:
A. receiving a first radiofrequency signal modulated according to a first train of one or more first pulses;
B. amplifying and filtering the first radiofrequency signal;
C. tracking a timing of the first pulses and generating at least one code synchronised with the first pulses;
D. generating a second radiofrequency signal modulated by said at least one code;
E. amplifying and filtering the second radiofrequency signal; and
F. transmitting the second radiofrequency signal;
wherein step C comprises:
generating, for each one of the first pulses, a sequence of one or more second pulses, said at least one code being synchronised with the second pulses, and a further sub-step,
C.1 generating a sequence of one or more envelopes for each one of the first pulses;
the method being **characterised in that** step C comprises:
C.2 generating a clock signal, synchronised with said envelopes, and a start signal, synchronised with the first train of one or more first pulses;
C.3 generating a not modulated code that varies in synchronisation with said clock signal according to a variation rule synchronised with said start signal;
C.4 generating a count synchronised with said clock signal, set at a starting value by said start signal;
C.5 providing stored data corresponding to said count; and
C.6 generating said sequence of one or more second pulses through modulation of said not modulated code through the data provided in sub-step C.5.

12. Method according to claim 11, **characterised in that** sub-step C.1 generates an envelope for each one of the first pulses.

13. SAR system, comprising a transmitting and receiving device and at least one active transponder, **characterised in that** the active transponder is a transponder according to any one of claims 1 to 10.

## Patentansprüche

1. Aktiver Transponder, für Radar-Systeme mit synthetischer Apertur (SAR), umfassend:
- ein Empfangsantennenmittel (20), das in der Lage ist, ein erstes Radiofrequenzsignal zu empfangen, welches entsprechend einer ersten Folge aus einem oder mehreren ersten Impulsen moduliert ist,
- ein erstes Verarbeitungsmittel (1, 2), das mit dem Empfangsmittel (20) verbunden und in der Lage ist, das erste Radiofrequenzsignal zu verstärken und zu filtern,
- ein Trennmittel (3), das mit dem ersten Verarbeitungsmittel (1, 2) verbunden ist und zwei Ausgänge umfasst, an denen es jeweils das von dem ersten Verarbeitungsmittel (1, 2) stammende Signal ausgibt,
- ein zweites Verarbeitungsmittel (7, 8, 9, 10, 11, 12), das mit einem ersten Ausgang des Trennmittels (3) verbunden und in der Lage ist, mindestens einen mit den ersten Impulsen synchronisierten Code zu erzeugen,
- ein Signalerzeugungsmittel (4), das mit einem zweiten Ausgang des Trennmittels (3) und mit den zweiten Verarbeitungsmitteln (7, 8, 9, 10, 11, 12) verbunden und in der Lage ist, ein zweites Radiofrequenzsignal zu erzeugen, das durch den von den zweiten Verarbeitungsmitteln (7, 8, 9, 10, 11, 12) erzeugten mindestens einen Code moduliert wird,
- ein drittes Verarbeitungsmittel (5, 6), das mit dem Signalerzeugungsmittel (4) verbunden und in der Lage ist, das zweite Radiofrequenzsignal zu verstärken und zu filtern, und
- ein Sendeantennenmittel (30), das in der Lage ist, das zweite Radiofrequenzsignal zu senden,
wobei das zweite Verarbeitungsmittel (7, 8, 9, 10, 11, 12) in der Lage ist, für jeden der ersten Impulse eine Abfolge aus einem oder mehreren zweiten Impulsen zu erzeugen, wobei der mindestens eine Code mit den zweiten Impulsen synchronisiert ist, und
wobei das zweite Verarbeitungsmittel ferner Folgendes umfasst:
- ein Hüllkurvenerkennungsmittel (7), das mit dem ersten Ausgang des Trennmittels (3) verbunden und in der Lage ist, eine Abfolge aus einer oder mehreren Hüllkurven für jeden der ersten Impulse zu erzeugen;
- Mittel zum Nachverfolgen der Zeitfolge der ersten Impulse;
wobei der Transponder **dadurch gekennzeichnet ist, dass** die Mittel zum Nachverfolgen der Zeitfolge der ersten Impulse Folgendes umfassen:
- ein DLL-Verzögerungsschleife-Nachverfolgungsmittel (8), das mit dem Hüllkurvenerkennungsmittel (7) verbunden und in der Lage ist, ein mit den Hüllkurven synchronisiertes Taktsignal und ein mit der ersten Folge aus einem oder mehreren ersten Impulsen synchronisiertes Startsignal zu erzeugen;
- ein Codeerzeugungsmittel (11), das mit dem DLL-Verzögerungsschleife-Nachverfolgungsmittel (8) verbunden und in der Lage ist, einen nicht modulierten Code zu erzeugen, der in Synchronisation mit dem Taktsignal entsprechend einer mit dem Startsignal synchronen Variationsregel variiert; und
- ein Zählmittel (12), das in der Lage ist, einen mit dem Taktsignal synchronisierten Zählwert zu erzeugen, der durch das Startsignal auf einen Anfangswert eingestellt wird,
wobei das zweite Verarbeitungsmittel ferner Folgendes umfasst:
- ein Speichermittel (9), das mit dem Zählmittel (12) verbunden ist und an der Speicheradresse gespeicherte Daten ausgibt, die dem Zählwert gleich sind, und
- ein erstes Moduliermittel (10), das mit dem Codeerzeugungsmittel (11) und dem Speichermittel (9) verbunden und in der Lage ist, die Abfolge aus einem oder mehreren zweiten Impulsen durch Modulation des nicht modulierten Codes durch die von dem Speichermittel (9) ausgegebenen Daten zu erzeugen.

2. Transponder nach Anspruch 1, **dadurch gekennzeichnet, dass** die Hüllkurvenerkennungsmittel (7) in der Lage sind, eine Hüllkurve für jeden der ersten Impulse zu erzeugen.

3. Transponder nach Anspruch 1 oder 2, **dadurch gekennzeichnet, dass** die Variationsregel durch ein Codeänderungsmittel (25) geändert werden kann.

4. Transponder nach einem der vorhergehenden Ansprüche, **dadurch gekennzeichnet, dass** die Daten, die unter der Speicheradresse gespeichert sind, welche dem Anfangswert des Zählwertes entspricht, ein Transponder-Kennzeichen umfassen.

5. Transponder nach einem der vorhergehenden Ansprüche, **dadurch gekennzeichnet, dass** die in dem Speichermittel (9) gespeicherten Daten Daten umfassen, die von einem oder mehreren zum Transponder gehörigen Sensoren stammen und vorzugsweise regelmäßig aktualisiert werden.

6. Transponder nach einem der vorhergehenden Ansprüche, **dadurch gekennzeichnet, dass** das DLL-Verzögerungsschleife-Nachverfolgungsmittel (8) mit einem schnellen Erfassungsmittel ausgestattet ist, das in der Lage ist, das Startsignal zu erzeugen.

7. Transponder nach Anspruch 6, **dadurch gekennzeichnet, dass** das schnelle Erfassungsmittel ein Korreliermittel umfasst, das in der Lage ist, eine oder mehrere Korrelationen zwischen der ersten Folge aus einem oder mehreren ersten Impulsen und einer oder mehreren zweiten Folgen aus einem oder mehreren dritten Bezugsimpulsen zu verarbeiten.

8. Transponder nach einem der vorhergehenden Ansprüche, **dadurch gekennzeichnet, dass** das Signalerzeugungsmittel ein Moduliermittel (4) umfasst, das in der Lage ist, das vom Trennmittel (3) stammende Signal durch den von den zweiten Verarbeitungsmitteln (7, 8, 9, 10, 11, 12) erzeugten mindestens einen Code zu modulieren und auf diese Weise das zweite Radiofrequenzsignal zu gewinnen.

9. Transponder nach Anspruch 8, **dadurch gekennzeichnet, dass** das Moduliermittel (4) in der Lage ist, Phase und/ oder Amplitude und/ oder Frequenz des vom Trennmittel (3) stammenden Signals zu modulieren.

10. Transponder nach Anspruch 8 oder 9, **dadurch gekennzeichnet, dass** das Moduliermittel (4) in der Lage ist, die Frequenz des vom Trennmittel (3) stammenden Signals zu verschieben.

11. Verfahren zum Empfangen eines ersten Radiofrequenzsignals und zum Senden eines zweiten Radiofrequenzsignals für Radar-Systeme und synthetischer Apertur (SAR), umfassend die folgenden Schritte:
A. Empfangen eines ersten Radiofrequenzsignals, welches entsprechend einer ersten Folge aus einem oder mehreren ersten Impulsen moduliert ist;
B. Verstärken und Filtern des ersten Radiofrequenzsignals;
C. Nachverfolgen einer Zeitfolge der ersten Impulse und Erzeugen von mindestens einem mit den ersten Impulsen synchronisierten Code;
D. Erzeugen eines zweiten Radiofrequenzsignals, das durch den mindestens einen Code moduliert ist;
E. Verstärken und Filtern des zweiten Radiofrequenzsignals; und
F. Senden des zweiten Radiofrequenzsignals;
wobei Schritt C Folgendes umfasst:
Erzeugen einer Abfolge aus einem oder mehreren zweiten Impulsen für jeden der ersten Impulse, wobei der mindestens eine Code mit den zweiten Impulsen synchronisiert ist, und einen weiteren Teilschritt
C.1 Erzeugen einer Abfolge aus einer oder mehreren Hüllkurven für jeden der ersten Impulse;
wobei das Verfahren **dadurch gekennzeichnet ist, dass** Schritt C Folgendes umfasst:
C.2 Erzeugen eines mit den Hüllkurven synchronisierten Taktsignals und eines mit der ersten Folge aus einem oder mehreren ersten Impulsen synchronisierten Startsignals;
C.3 Erzeugen eines nicht modulierten Codes, der in Synchronisation mit dem Taktsignal entsprechend einer mit dem Startsignal synchronisierten Variationsregel variiert;
C.4 Erzeugen eines mit dem Taktsignal synchronisierten Zählwertes, der durch das Startsignal auf einen Anfangswert eingestellt wird,
C.5 Bereitstellen von dem Zählwert entsprechenden gespeicherten Daten; und
C.6 Erzeugen der Abfolge aus einem oder mehreren zweiten Impulsen durch Modulation des nicht modulierten Codes durch die im Teilschritt C.5 bereitgestellten Daten.

12. Verfahren nach Anspruch 11, **dadurch gekennzeichnet, dass** der Teilschritt C.1 eine Hüllkurve für jeden der ersten Impulse erzeugt.

13. SAR-System, das eine Sende- und Empfangseinrichtung und mindestens einen aktiven Transponder umfasst, **dadurch gekennzeichnet, dass** es sich bei dem Transponder um einen Transponder nach einem der Ansprüche 1 bis 10 handelt.

## Revendications

1. Balise répondeuse active, pour systèmes de radar à ouverture synthétique, ou SAR (« synthetic aperture radar »), comprenant :
- des moyens formant antenne de réception (20), susceptibles de recevoir un premier signal à fréquence radio modulé en fonction d'un premier train d'une ou de plusieurs premières impulsions ;
- des premiers moyens de traitement (1, 2), connectés aux moyens de réception (20), susceptibles d'amplifier et de filtrer le premier signal à fréquence radio ;
- des moyens de séparation (3), connectés aux premiers moyens de traitement (1, 2), comprenant deux sorties sur chacune desquelles ils délivrent en sortie le signal venant des premiers moyens de traitement (1, 2) ;
- des deuxièmes moyens de traitement (7, 8, 9, 10, 11, 12), connectés à une première sortie des moyens de séparation (3), susceptibles de générer au moins un code synchronisé avec les premières impulsions ;
- des moyens de génération de signal (4), connectés à une deuxième sortie des moyens de séparation (3) et aux deuxièmes moyens de traitement (7, 8, 9, 10, 11, 12), susceptibles de générer un deuxième signal à fréquence radio modulé par ledit code au nombre d'au moins un généré par les deuxièmes moyens de traitement (7, 8, 9, 10, 11, 12) ;
- des troisièmes moyens de traitement (5, 6), connectés aux moyens de génération de signal (4), susceptibles d'amplifier et de filtrer le deuxième signal à fréquence radio ; et
- des moyens formant antenne d'émission (30), susceptibles d'émettre le deuxième signal à fréquence radio ;
dans laquelle les deuxièmes moyens de traitement (7, 8, 9, 10, 11, 12) sont susceptibles de générer, pour chacune des premières impulsions, une séquence d'une ou de plusieurs deuxièmes impulsions, ledit code au nombre d'au moins un étant synchronisé avec les deuxièmes impulsions ; et
dans laquelle lesdits deuxièmes moyens de traitement comprennent de plus :
- des moyens de détection d'enveloppe (7), connectés à la première sortie des moyens de séparation (3), susceptibles de générer une séquence d'une ou de plusieurs enveloppes pour chacune des premières impulsions ;
- des moyens pour suivre le minutage des premières impulsions ;
la balise répondeuse étant **caractérisée en ce que** lesdits moyens pour suivre le minutage des premières impulsions comprennent :
- des moyens de suivi à boucle à verrouillage de retard (8), connectés aux moyens de détection d'enveloppe (7), susceptibles de générer un signal d'horloge, synchronisé avec lesdites enveloppes, et un signal de démarrage, synchronisé avec le premier train d'une ou de plusieurs premières impulsions ;
- des moyens de génération de code (11), connectés aux moyens de suivi à boucle à verrouillage de retard (8), susceptibles de générer un code non modulé qui varie en synchronisme avec ledit signal d'horloge en fonction d'une règle de variation synchronisée avec ledit signal de démarrage ; et
- des moyens de comptage (12) susceptibles de générer un comptage synchronisé avec ledit signal d'horloge, établi à une valeur de démarrage par ledit signal de démarrage ;
les deuxièmes moyens de traitement comprenant de plus :
- des moyens formant mémoire (9), connectés aux moyens de comptage (12), qui délivrent en sortie des données mémorisées à l'adresse de mémoire égale audit comptage ; et
- des premiers moyens de modulation (10), connectés aux moyens de génération de code (11) et aux moyens formant mémoire (9), susceptibles de générer ladite séquence d'une ou de plusieurs deuxièmes impulsions par modulation dudit code non modulé à l'aide des données délivrées en sortie par les moyens formant mémoire (9).

2. Balise répondeuse selon la revendication 1, **caractérisée en ce que** les moyens de détection d'enveloppe (7) sont susceptibles de générer une enveloppe pour chacune des premières impulsions.

3. Balise répondeuse selon la revendication 1 ou 2, **caractérisée en ce que** ladite règle de variation peut être changée à l'aide de moyens de changement de code (25).

4. Balise répondeuse selon l'une quelconque des revendications précédentes, **caractérisée en ce que** les données mémorisées à l'adresse de mémoire, correspondant à la valeur de démarrage dudit comptage, comprennent un identifiant de balise répondeuse.

5. Balise répondeuse selon l'une quelconque des revendications précédentes, **caractérisée en ce que** les données mémorisées dans les moyens formant mémoire (9) comprennent des données, de préférence périodiquement remises à jour, venant d'un ou de plusieurs capteurs associés à la balise répondeuse.

6. Balise répondeuse selon l'une quelconque des revendications précédentes, **caractérisée en ce que** les moyens de suivi à boucle à verrouillage de retard (8) sont munis de moyens d'acquisition rapide, susceptibles de générer ledit signal de démarrage.

7. Balise répondeuse selon la revendication 6, **caractérisée en ce que** lesdits moyens d'acquisition rapide comprennent des moyens de corrélation, susceptibles de traiter une ou plusieurs corrélations entre le premier train d'une ou de plusieurs premières impulsions et un ou plusieurs deuxièmes trains d'une ou de plusieurs troisièmes impulsions de référence.

8. Balise répondeuse selon l'une quelconque des revendications précédentes, **caractérisée en ce que** les moyens de génération de signal comprennent des moyens de modulation (4), susceptibles de moduler le signal venant des moyens de séparation (3) à l'aide dudit code au nombre d'au moins un généré par les deuxièmes moyens de traitement (7, 8, 9, 10, 11, 12), de façon à obtenir ainsi le deuxième signal à fréquence radio.

9. Balise répondeuse selon la revendication 8, **caractérisée en ce que** les moyens de modulation (4) sont susceptibles de moduler en phase et/ou en amplitude et/ou en fréquence le signal venant des moyens de séparation (3).

10. Balise répondeuse selon la revendication 8 ou 9, **caractérisée en ce que** les moyens de modulation (4) sont susceptibles de décaler la fréquence du signal venant des moyens de séparation (3).

11. Procédé de réception d'un premier signal à fréquence radio et d'émission d'un deuxième signal à fréquence radio, pour des systèmes de radar à ouverture synthétique, ou SAR, comprenant les étapes suivantes :
A. la réception d'un premier signal à fréquence radio modulé en fonction d'un premier train d'une ou de plusieurs premières impulsions ;
B. l'amplification et le filtrage du premier signal à fréquence radio ;
C. le suivi d'un minutage des premières impulsions et la génération d'au moins un code synchronisé avec les premières impulsions ;
D. la génération d'un deuxième signal à fréquence radio modulé par ledit code au nombre d'au moins un ;
E. l'amplification et le filtrage du deuxième signal à fréquence radio ; et
F. l'émission du deuxième signal à fréquence radio ;
dans lequel l'étape C comprend :
la génération, pour chacune des premières impulsions, d'une séquence d'une ou de plusieurs deuxièmes impulsions, ledit code au nombre d'au moins un étant synchronisé avec les deuxièmes impulsions, et une sous-étape additionnelle,
C.1 de génération d'une séquence d'une ou de plusieurs enveloppes pour chacune des premières impulsions ;
le procédé étant **caractérisé en ce que** l'étape C comprend :
C.2 la génération d'un signal d'horloge, synchronisé avec lesdites enveloppes, et d'un signal de démarrage, synchronisé avec le premier train d'une ou de plusieurs premières impulsions ;
C.3 la génération d'un code non modulé qui varie en synchronisme avec ledit signal d'horloge en fonction d'une règle de variation synchronisée avec ledit signal de démarrage ;
C.4 la génération d'un comptage synchronisé avec ledit signal d'horloge, établi à une valeur de démarrage par ledit signal de démarrage ;
C.5 la délivrance de données mémorisées correspondant audit comptage ; et
C.6 la génération de ladite séquence d'une ou de plusieurs deuxièmes impulsions par modulation dudit code non modulé à l'aide des données délivrées dans la sous-étape C.5.

12. Procédé selon la revendication 11, **caractérisé en ce que** ladite sous-étape C.1 génère une enveloppe pour chacune des premières impulsions.

13. Système de radar à ouverture synthétique, comprenant un dispositif d'émission et de réception et au moins une balise répondeuse active, **caractérisé en ce que** la balise répondeuse active est une balise répondeuse selon l'une quelconque des revendications 1 à 10.
